Europäisches Patentamt

European Patent Office

Office européen des brevets

(11) Publication number: **0 175 753**
**B1**

# EUROPEAN PATENT SPECIFICATION

(45) Date of publication of patent specification: **09.08.89**

(21) Application number: **85901730.3**

(22) Date of filing: **13.03.85**

(86) International application number:
**PCT/US85/00399**

(87) International publication number:
**WO 85/04150 26.09.85 Gazette 85/21**

(51) Int. Cl.⁴: **B 65 B 9/02, B 65 B 23/00,
B 65 B 25/00, B 65 B 51/10,
B 65 B 51/26, B 65 B 51/32**

(54) **PROTECTIVE CUSHIONING.**

(30) Priority: **15.03.84 US 589699
31.08.84 US 645887
26.10.84 US 665383**

(43) Date of publication of application:
**02.04.86 Bulletin 86/14**

(45) Publication of the grant of the patent:
**09.08.89 Bulletin 89/32**

(84) Designated Contracting States:
**AT BE CH DE FR GB LI NL SE**

(56) References cited:
**CH-A- 516 053
DE-A-2 641 484
US-A-2 549 122
US-A-3 229 442
US-A-3 411 263
US-A-3 623 891
US-A-3 768 724
US-A-4 249 364
US-A-4 299 075
US-A-4 364 892**

(73) Proprietor: **THE CROWELL CORPORATION
Crowell Road and Harding Avenue, P.O. Box
3227
Newport, DE 19804-0227 (US)**

(72) Inventor: **ADELMAN, Herbert, B.
R.D. 2, Box 53A
Hockessin, DE 19707 (US)**
Inventor: **D'ANGELO, James, J.
378 Annette Court
Wyckoff, NJ 07481 (US)**

(74) Representative: **Powell, Stephen David et al
J.F. Williams & Co. 34 Tavistock Street
London WC2E 7PB (GB)**

Courier Press, Leamington Spa, England.

## Description

The present invention relates to the cushioning of articles with thin protective layers of resilient foam that are laminated to even thinner but much stronger supporting sheets.

A laminated material is disclosed in Swiss patent CH-A-516053 comprising a metallized layer laminated to a plastics foam layer having a thickness of the order of a few millimetres. This disclosure corresponds generally to the introduction of claims 1 and 10.

Among the objects of the present invention is the provision of novel cushioning arrangements and techniques with such laminates.

According to a first aspect of the present invention, there is provided a packaging laminate comprising a metallized layer laminated to a plastics foam layer between about 1/32 inch (0.796 mm) and about 1/8 inch (3.18 mm) thick, characterised in that the metallized layer is of polyethylene terephthalate about one mil (25.4 microns) thick and that the foam layer is a microcellular cushioning foam, the outer face of which carries a protective agent selected from the class consisting of at least one of an antistat agent and a volatile corrosion inhibitor.

The metallized polyethylene terephthalate layer has the advantage of providing a particularly desirable and effective backing sheet for carrying a resilient foam layer to make a protective packaging laminate. The metallized layer provides electrical shielding, and the 1 mil thickness in conjunction with the foam layer provides the strength that makes the laminate highly effective against mechanical shocks. At the same time the 1 mil thickness simplifies heat sealing inasmuch as heat applied to the outside face of the supporting film has only a short distance to travel to reach and heat up the foam.

The antistat agent has the advantage of cooperating with the electrical conductivity of the metallized structure to protect wrapped objects against static discharges and/or the volatile corrosion inhibitor protects corrodible parts.

In a preferred embodiment the foam also carries a cohesive-nonadhesive so that the laminate very simply fastens to itself around any wrapped object.

According to a second aspect of the present invention, there is provided a package comprising an article sensitive to mechanical shock and electric fields and wrapped in a packaging laminate characterised in that the laminate comprises a metallized polyethylene terephthalate film about one mil (25.4 microns) thick, laminated to a layer of microcellular cushioning plastic foam between about 1/32 (0.796 mm) and about 1/8 inch (3.18 mm) thick, the foam carrying an antistat agent.

According to a third aspect of the present invention, there is provided a method of automatically packaging a series of articles to be protected against mechanical shock and electrical influences characterised in that the articles are successively sandwiched between the foam faces of sheets of backed plastic foam, the foam being a cushioning layer about 1/32 inch (0.796 mm) thick to about 1/8 inch (3.18 mm) thick adhered to a backing of metallized polyethylene terephthalate film about one mil (25.4 microns) thick and said foam faces carrying a protective agent selected from the class consisting of at least one of an antistat agent and a volatile corrosion inhibitor, and the sandwiched sheets are sealed to each other.

According to a fourth aspect of the present invention there is provided a packaging laminate comprising a metallized layer laminated to a plastics foam layer between about 1/32 inch (0.796 mm) and about 1/8 inch (3.18 mm) thick, characterised in that the metallized layer is of polyethylene terephthalate about one mil (25.4 microns) thick and that the foam layer is a microcellular cushioning foam, the outer face of which carries a layer of cohesive-nonadhesive.

Preferred embodiments of the present invention will now be described, by way of example only.

Packaging sheets according to the present invention can be treated or coated with materials, such as anti-stat agents, volatile corrosion inhibitors and the like, such as those mentioned in U.S. Patent No. 4,321,297. With regard to heat sealing processes, some coatings of this type improve or do not interfere with heat-sealing and so can be coated over the entire foam face of one or both packaging sheets. Where such added materials interfere with the heat-sealing, it is preferred that such materials be coated in locations at which heatsealing is not effected.

Thus, a surface-active agent such as a surface-active anti-stat can cause a heated foam layer to delaminate from an aluminium foil to which it had been adhered, particularly if some of that surface-active agent finds its way between the foam layer and the foil. It is accordingly desirable when laminating metal foil to foam that is to have anti-stat properties, for the foam to be of the closed-cell type and for the anti-stat to be applied to the outer face of the foam after the foam is laminated to the foil.

With a metal foil or metallized backer contained in one or both of the packaging sheets, the resulting package will protect the article packaged in it against electric fields. Such protection is particularly desirable when packaging transistors or similar electronic articles that are constructed for operation at very low voltage. For such protection it is preferred to have the packaging in a single packaging sheet that is folded over. By such fold-over, the metal foil or metallized layer covering one side of the packaged article is electrically continuous with the metal foil or metallized layer covering the other side of the packaged article, so that the protection against electric fields is improved.

For maximum protection against electric fields, copper or silver foils are better than aluminium foils, and thin copper foil with a very thin, e.g. 1/2- micron thick, flash coating of silver may be most costeffective. Such a flash coating can be applied to only one face of each foil.

The backing layer covering a foil-carrying sheet can be provided with openings, as for example, along its borders so that a grounding connection can be clipped to those borders and thus ground the foil.

Whether or not the metal foil shielding is one fold-over sheet or two opposing sheets, it is a very effective barrier against the penetration of moisture vapor. Accordingly, by doing the packaging in a very low humidity atmosphere, e.g. below 30% relative humidity at room temperature, the danger of corrosion for packaged water-sensitive material is sharply reduced or completely eliminated. Polyethylene terephthalate is a good moisture barrier, particularly with a metallized surface.

Laminates according to the present invention can be of the types described in U.S. Patent No. 4,321,297, carrying an anti-static or corrosion-inhibiting layer or a layer that contains both an anti-stat and a corrosion inhibitor, on the face of the foam. The foam layer itself seals at about 100°C. The anti-stat and/or corrosion inhibitor can lower the heat sealing temperature to about 95°C. The backing for the foam preferably has a tensile strength at least twenty times that of the foam layer.

Polyethylene terephthalate films withstand temperatures of about 160°C that may be applied to effect heat-sealing, and are used in film or sheet thicknesses of about 1 mil (25.4 microns). Such small thicknesses are still quite strong and also as pointed out above reduce the time required for the heat-sealing heat to penetrate through to the foam.

Microwave dielectric heating is also suitable, particularly since it generates heat inside the sheet.

Supporting layers of woven or unwoven strips of plastic film about 1 to 3 millimetres wide can also be laminated to the heat-sealable foam to make packaging sheets.

A foam support can be made of combinations of layers.

A suitable anti-static stratum can be disposed upon the outer face of the micro-cellular polymer layer, as by evaporation of the solvent from a solution of the anti-stat applied over that layer. Alternatively, the polymer of the foam can incorporate anti-static ingredients that impart anti-static properties to the foam.

Where anti-stat is combined with the cohesive-nonadhesive layer as described in U.S. Patent No. 4,321,297, it is preferred to use an anti-stat like potassium formate or sodium formate, or the corresponding acetates, or even acetylene black which is not surface-active. The surface-active anti-stats tend to materially reduce the cementing strength of adhesives. A mixture of 97 to 100 parts natural rubber latex having 50% solids, with 3 to 3-1/2 parts potassium formate, produces a very effective coating formulation. Applied as a layer that on evaporation leaves a coating weight of 0.6 gram per square meter on a micro-cellular closed-cell polypropylene foam that had been laminated to a paper sheet, yields a product that has very good cohesive properties and also passes the anti-stat test MIL-B-81705-B. In general, the anti-stat concentration can vary from about 0.1 to about 1 gram per square meter, and the cohesive-nonadhesive concentration from about 1 to about 10 grams per square meter. A little glycerol up to an amount equal to that of the anti-stat can also be present in the anti-stat coating or in the combined anti-stat cohesive-nonadhesive coating.

As explained in U.S. patent No. 4,321,297, water-soluble anti-stats are preferably deposited from water solution, and water-insoluble ones from solution in a solvent like methanol. The uncured rubbers for the cohesive-nonadhesive cement can also be applied from solution.

Anti-stat coatings, including such coatings that are also cohesive-nonadhesive, generally undergo reduction of anti-stat effectiveness when aged over a long period of time. Although U.S. Patent No. 3,658,744 indicates (bottom of its column 8) that the anti-stat can cause instability in the latex, the combinations of anti-stat with cohesive-nonadhesives in accordance with the present invention show gradual diminution in both anti-stat effectiveness, as well as cohesiveness, over several months. Such dimunition is slowed by shielding the coatings against light, particularly actinic light, and also by covering the coatings to keep air from them. The laminated products so coated are accordingly best tightly wrapped with opaque paper or the like when they are stored and shipped. Thus, a roll or stack of the laminated sheeting can be so wrapped. Where an anti-stat is very dark in color, acetylene black, for example, protection against light is not so important. Increasing the anti-stat additions to over 1 gram per square meter helps counteract its degradation.

The foregoing stability factors are of key significance. It is believed in this connection that there has in the past been some advertising offering for sale paper-foam wrapping laminates in which the exposed foam surface is rendered anti-static as well as cohesive-nonadhesive, but so far as can be determined no acceptable product has previously been delivered pursuant to such advertising, and the advertising itself appears to have been discontinued.

Aluminium foil can, if desired, be laminated between the foam and its support. Aluminium foil is a vapor and/or light barrier to also help protect sensitive materials such as light-sensitive photographic films. An aluminium foil .0008 inch (20.32 microns) thick and even .00035 inch (8.89 microns) thick is very effective for this purpose. The aluminium foil can also enhance the protective effect by providing an electrostatic barrier that shields against external static electricity.

The packaging sheets according to the present invention have excellent versatility and performance, particularly for the special problems of packaging material sensitive to corrosivity, static electricity, light, abrasion, etc. The micro-cellular polyolefins in such laminates comply with F.D.A. regulations which permit them to be safely used as an article or a component of an article in contact with food. They are unaffected by exposure to grease, water and most acids, bases and solvents. They stay flexible within a wide temperature range, have neutral pH, are nontoxic, non-corrosive, lint-free, have excellent abrasion resistance and will not support the growth of mildew or fungus. They also have an excellent clean whitish appearance which is highly desirable for the packaging of many materials.

Some foam-supporting sheets such as spun-bonded polypropylene sheets can be adversely affected by molten adhesives, and polyester cements or epoxy cement or the oil-resistant cements of U.S. Patent No. 4,321,297 can be used for securing the foam to such sheets.

Where a layer of volatile corrosion inhibitors is applied to a laminate of the present invention, it can be applied as a surface coating by itself or mixed with the natural rubber latex of a cohesive-nonadhesive formulation and/or with anti-stat.

Aluminium foil that is extremely thin, e.g. 0.3 to 0.8 mil (7.62 to 20.32 microns), is opaque but such thin foil usually contains pin-holes that admit light even when they are filled with adhesive. It is, accordingly, best not to rely on such thin foils for the most lightsensitive of articles. Carbon black can be incorporated in the foam, as by foaming carbonloaded resin and will impart anti-static properties in addition to opaqueness, particularly if the carbon black is acetylene black.

For wrapping light-sensitive material, the opaque wrapping sheet can carry the cohesive-nonadhesive coating, but does not need the VCI unless the light-sensitive material is packaged with corrodible metal. The cohesive-nonadhesive coating, or the foam surface under it, can also contain the anti-static agent.

The wrapping sheets having the cohesive-nonadhesive coating can be used for any wrapping or interleaving application. The cohesive-nonadhesive layer makes such use particularly desirable inasmuch as such sheets are readily secured to each other without the need for supplementary closure materials such as tape, staples or other fasteners, glue, heat-sealing or twine. Examples of such use are given in U.S. Patent No. 4,321,297.

Instead of the usual types of plastic fibers, narrow widths of polyethylene terephthalate film can be interwoven to make one or both of the plies. Such a ply makes a very effective reinforcement for a paper ply whether such reinforcement be an outer layer of the packaging sheet or a layer between the foam layer and the adjacent ply. Having a relatively smooth surface on one face of the packaging sheet is desirable because such a surface can be printed with advertising or the like.

An un-reinforced sheet is only suitable for very light duty packaging use, whereas a well-reinforced packing sheet is very difficult to tear. This is of major importance when packaging items which are likely to puncture or tear the packaging material, and in the event of a puncture, the sheet will generally not tear beyond the nearest reinforcement.

It will be noted that as defined herein, the cohesive-nonadhesive layers have essentially no tack and cannot be considered pressure-sensitive adhesive cements, all of which have substantial tack.

The thickness of the adhesive layer is generally abut 1 to 2 mils (25.4 to 12.7 microns), and when the adhesive is applied it tends to sink into the material and the irregularities in the surface of the foam so that its measured thickness can be less.

Where the materials to be packaged are magnetic recordings that can be damaged by magnetic fields, the packaging laminates can have a layer of iron foil preferably 3 mils (76.2 microns) thick or similar material of high magnetic permeability, preferably with such layer on both sides of the packaged material and also preferably with both such layers in physical contact with each other. An iron layer will also provide shielding against static electricity and other electrical fields, just as an aluminium layer does.

Some metal foils are supplied with one or both surfaces carrying an extremely thin coating of a protective oil, in which case such coating should be removed before the foil is laminated to another substrate. Even such thin coatings of oil will reduce the bonding strength to the adjacent lamina. Where a surface-active anti-stat is used, care should also be taken to keep such anti-stat from working its way to the foam surface that is bonded to its support layer. Upon heat-sealing, the action of the heat combined with the presence of a surface-active agent significantly detracts from the heat-seal bonding. This is particularly serious when the foam is originally bonded to an oil-coated metal foil, and in such an arrangement the heat-sealing can actually cause the foil to delaminate.

It is accordingly advisable where a surface-active coating is used, to apply such coating to the face of a closed-cell foam layer after that layer has been bonded to its backing. Also, where such coating is applied to a long length of backed foam to be used in a melt-type heat-sealing, the coating can be kept away from the side edges where the melting takes place.

## Claims

1. A packaging laminate comprising a metallized layer laminated to a plastics foam layer between about 1/32 inch (0.796 mm) and about 1/8 inch (3.18 mm) thick, characterised in that the metallized layer is of polyethylene terephthalate about one mil (25.4 microns) thick and that the foam layer is a microcellular cushioning foam, the outer face of which carries a protective agent selected from the class consisting of at least one of an antistat agent and a volatile corrosion inhibitor.

2. A laminate according to claim 1, in which the foam also carries a cohesive-nonadhesive.

3. A laminate according to claim 2, in which the cohesive-nonadhesive and the protective agent are combined in a single coating layer.

4. A package comprising an article sensitive to mechanical shock and electric fields and wrapped in a packaging laminate characterised in that the laminate comprises a metallized polyethylene terephthalate film about one mil (25.4 microns) thick, laminated to a layer of micro-cellular cushioning plastic foam between about 1/32 (0.796 mm) and about 1/8 inch (3.18 mm) thick, the foam carrying an antistat agent.

5. A package according to claim 4 in which the sensitive article is a device which can be damaged by static electricity.

6. A package according to claim 4 in which the sensitive article is also corrodible and the foam carries volatile corrosion inhibitor as well as an antistat agent.

7. A method of automatically packaging a series of articles to be protected against mechanical shock and electrical influences characterised in that the articles are successively sandwiched between the foam faces of sheets of backed plastic foam, the foam being a cushioning layer about 1/32 inch (0.796 mm) thick to about 1/8 inch (3.18 mm) thick adhered to a backing of metallized polyethylene terephthalate film about one mil (25.4 microns) thick and said foam faces carrying a protective agent selected from the class consisting of at least one of an antistat agent and a volatile corrosion inhibitor and the sandwiched sheets are sealed to each other.

8. A method according to claim 7 in which the sealing is a heat sealing.

9. A method according to claim 8 in which the heat sealing is effected by first applying a hot melting bar directly to the foam layer to be heat sealed, to melt that layer.

10. A packaging laminate comprising a metallized layer laminated to a plastics foam layer between about 1/32 inch (0.796 mm) and about 1/8 inch (3.18 mm) thick, characterised in that the metallized layer is of polyethylene terephthalate about one mil (25.4 microns) thick and that the foam layer is a microcellular cushioning foam, the outer face of which carries a layer of cohesive-nonadhesive.

**Patentansprüche**

1. Ein Verpackungslaminat, umfassend eine metallisierte Schicht, die auf eine Kunststoffschaumschicht einer Dicke zwischen etwa 1/32 inch (0,796 mm) und etwa 1/8 inch (3,18 mm) laminiert ist, dadurch gekennzeichnet, dass die metallisierte Schicht aus Polyethylenterephthalat einer Dicke von etwa einem mil (25,4 Mikron) ist und dass die Schaumschicht ein mikrozellulärer, polsternder Schaum ist, dessen äussere Oberfläche ein Schutzmittel trägt, welches ausgewählt ist aus der Klasse, bestehend aus wenigstens einem Antistatikum und einem flüchtigen Korrosionsinhibitor.

2. Ein Laminat gemäss Anspruch 1, worin der Schaum auch ein kohäsives, nicht adhäsives Mittel trägt.

3. Ein Laminat gemäss Anspruch 2, worin das kohäsive nicht adhäsive Mittel und das Schutzmittel in einer einzigen Überzugsschicht kombiniert sind.

4. Eine Packung, enthaltend einen gegen mechanische Erschütterung und gegen elektrische Felder empfindlichen Gegenstand, der in ein Verpackungslaminat eingepackt ist, dadurch gekennzeichnet, dass das Laminat einen metallisierten Polyethylenterephthalatfilm einer Dicke von etwa einem mil (25,4 Mikron) umfasst, welcher auf eine Schicht aus mikrozellulärem polsterndem Kunststoffschaum einer Dicke zwischen etwa 1/32 (0,796 mm) und etwa 1/8 inch (3,18 mm) laminiert ist, und wobei der Schaum ein Antistatikum trägt.

5. Eine Packung gemäss Anspruch 4, worin der empfindliche Gegenstand eine Vorrichtung ist, welche durch statische Elektrizität beschädigt werden kann.

6. Eine Packung gemäss Anspruch 4, worin der empfindliche Gegenstand auch korrodierbar ist und der Schaum sowohl einen flüchtigen Korrosionsinhibitor als auch ein Antistatikum trägt.

7. Ein Verfahren zum automatischen Verpacken einer Reihe von Gegenständen, welche gegen mechanische Erschütterung und gegen elektrische Einflüsse geschützt werden sollen, dadurch gekennzeichnet, dass die Gegenstände nacheinander zwischen die Schaumoberflächen von mit einer Rückseite versehenen Kunststoffschaumbögen geschichtet werden, wobei der Schaum eine polsternde Schicht einer Dicke von etwa 1/32 inch (0,796 mm) bis etwa 1/8 inch (3,18 mm) ist, der an der Rückseite eines metallisierten Polyethylenterephthalatfilms einer Dicke von etwa einem mil (24,4 Mikron) haftet, und wobei diese Schaumoberflächen ein Schutzmittel tragen, das ausgewählt ist aus der Klasse, bestehend aus wenigstens einem Antistatikum und einem flüchtigen Korrosionsinhibitor, und die geschichteten Bögen miteinander versiegelt werden.

8. Ein Verfahren gemäss Anspruch 7, wobei das Versiegeln Heissversiegeln ist.

9. Ein Verfahren gemäss Anspruch 8, wobei das Heissversiegeln dadurch erfolgt, dass zunächst eine heissschmelzende Schiene direkt auf die heiss zu versiegelnde Schaumschicht angelegt wird, um diese Schicht zu schmelzen.

10. Ein Verpackungslaminat, enthaltend eine metallisierte Schicht, die auf eine Kunststoffschaumschicht einer Dicke zwischen etwa 1/32 inch (0,796 mm) und etwa 1/8 inch (3,18 mm) laminiert ist, dadurch gekennzeichnet, dass die metallisierte Schicht aus Polyethylenterephthalat einer Dicke von etwa einem mil (25,4 Mikron) ist, und dass die Schaumschicht ein mikrozellulärer polsternder Schaum ist, dessen äussere Oberfläche eine Schicht eines kohäsiven, nicht adhäsiven Mittels trägt.

## Revendications

1. Stratifié d'emballage, comprenant une couche métallisée stratifiée à une couche de mousse plastique ayant une épaisseur d'environ 1/32 in (0,796 mm) à environ 1/8 in (3,18 mm), caractérisé en ce que la couche métallisée est en polytéréphtalate d'éthylène ayant une épaisseur d'environ 1 mil (25,4 micromètres) et en ce que la couche de mousse est une mousse de rembourrage microcellulaire dont la face externe porte un agent protecteur choisi dans la classe comprenant au moins un agent antistatique et au moins un inhibiteur volatil de corrosion.

2. Stratifié suivant la revendication 1, dans lequel la mousse porte également un agent cohésif-non adhésif.

3. Stratifié suivant la revendication 2, dans lequel l'agent cohésif-non adhésif et l'agent protecteur sont réunis en une couche de revêtement unique.

4. Paquet comprenant un article sensible au choc mécanique et aux champs électriques et enveloppé dans un stratifié d'emballage, caractérisé en ce que le stratifié comprend un film de polytéréphtalate d'éthylène métallisé d'environ 1 mil (25,4 micromètres) d'épaisseur, stratifié sur une couche de mousse plastique microcellulaire de rembourrage ayant une épaisseur d'environ 1/32 in (0,796 mm) à environ 1/8 in (3,18 mm), la mousse portant un agent antistatique.

5. Paquet suivant la revendication 4, dans lequel l'article sensible est un dispositif qui peut être endommagé par l'électricité statique.

6. Paquet suivant la revendication 4, dans lequel l'article sensible est également susceptible de corrosion et la mousse porte un inhibiteur volatil de corrosion de même qu'un agent antistatique.

7. Procédé d'emballage automatique d'une série d'articles devant être protégés d'un choc mécanique et d'influences électriques, caractérisé en ce que les articles sont successivement intercalés entre les faces côté mousse des feuilles de mousse plastique sur support, la mousse étant une couche de rembourrage d'environ 1/32 in (0,796 mm) à environ 1/8 in (3,18 mm) d'épaisseur adhérant à un support formé d'un film métallisé de polytéréphtalate d'éthylène d'environ 1 mil (25,4 micromètres) d'épaisseur, lesdites faces de la mousse portant un agent protecteur choisi dans la classe comprenant au moins un agent antistatique et un inhibiteur volatil de corrosion et les feuilles intercalées étant soudées l'une à l'autre.

8. Procédé suivant la revendication 7, dans lequel le soudage est un soudage à la chaleur.

9. Procédé suivant la revendication 8, dans lequel le soudage à la chaleur est effectué en appliquant tout d'abord une barre de fusion chaude directement à la couche de mousse devant être soudée à chaud, pour faire fondre cette couche.

10. Stratifié d'emballage comprenant une couche métallisée stratifiée à une couche de mousse plastique ayant une épaisseur d'environ 1/32 in (0,796 mm) à environ 1/8 in (3,18 mm), caractérisé en ce que la couche métallisée est une couche de polytéréphtalate d'éthylène d'environ 1 mil (25,4 micromètres) d'épaisseur et en ce que la couche de mousse est une mousse microcellulaire de rembourrage dont la face externe porte une couche d'agent cohésif-non adhésif.